# EUROPEAN PATENT APPLICATION

(11) **EP 4 734 330 A1**
(43) Date of publication of application: **29.04.2026**
(21) Application number: 24825376.7
(22) Date of filing: 06.06.2024
(51) Int. Cl.: H02J 50/10, H02J 7/00

(54) **CHARGER FOR A SMARTWATCH**

(30) Priority: 20.06.2023 ES 202331096 U
(71) Applicant: Preon Technologies, S.L., 33205 Gijón Asturias (ES)
(72) Inventor: ROMANILLOS RUEDA, Juan Carlos, 46014 Valencia (ES); PIEDRA FERNÁNDEZ, José Manuel, 33205 Gijón (Asturias) (ES)
(74) Representative: Pons IP
(86) International application number: PCT/ES2024/070354
(87) International publication number: WO 2024/261358

(57) **Abstract**

The present invention relates to a charger for a smartwatch intended for the technical sector relating to watches, which allows the smartwatch to be charged while it is worn by the user and enables the watch to be operated and the crown and auxiliary buttons, as well as the rotating bezel, to be moved without limitations. Likewise, it extends the capacity of the internal battery of the watch. The charging unit of the watch is housed in the strap, having embodiments that are provided with inductive charging and means for measuring and limiting the heat that is dissipated during inductive charging.

## Description

Intended for the technical sector relating to watchmaking.

### Background

Smartwatches have many functionalities, with some requiring connection to a phone that allows the user to track their activity, but also to read their emails or send instant messages regarding events, among others, and it is due to these features that they are becoming more popular every day. The main technology companies in the sector are leading the market with products with many features, but with a big problem: in most cases, the battery life without intensive use may not last one day. In the majority of cases, in order to charge the battery, the user must remove the watch from the wrist and then recharge the battery.

Closer to the field of the present invention, there are prior art documents that refer to different devices for charging watches that are connected to the watches while they are being worn. An example of this type can be seen in document WO2019228656A1 by the holder Brendan Tschabold. This patent envisions inductive charging and has a casing that houses at least one battery, this body being located around the perimeter of the watch in the angular sectors not occupied by the strap. This arrangement has the disadvantage of increasing the size of the assembly making it excessively bulky, while on the contrary, positioning the batteries in the bending area of the wrist can be uncomfortable, forcing the watch to be removed.

Patent document US2021126477A1 by applicant Robert Charles De Maio, Sparks, NV describes a battery housed on the bezel of a watch that aesthetically fits within a cut-out around the perimeter of the face of the smartwatch. In practice, it follows that it will not allow a rotating bezel to be operated, and in any case, it will uniquely alter the aesthetics of the watch, which is also a disadvantage for sales purposes.

The applicant is not aware of any technical solutions that advantageously solve the aforementioned problem like the proposed invention.

### Object

The invention aims to provide simple and efficient means that provide the option of charging a smartwatch while it is being worn, allowing the device to be operated without limitations with access to both the crown, auxiliary buttons or rotating bezel, if available.

### Description of the invention

As defined in the objectives, the high functionality of watches of this type requires an adequate charging capacity for their operation, which forces the size of conventional watches to be increased to accommodate batteries that satisfy their performance; however, this makes them very bulky, for example, some functions such as GPS or communication can consume the battery capacity in just a few hours of operation.

In order to provide a technical solution that solves these problems, the stated smart charger comprises an external and removable charging unit that is placed on the watch strap, this charging unit having a plurality of electrical contacts which cooperate with complementary contacts located on the strap, the connection to the power supply of the watch is made either by electrical contacts located between the lugs of the case of the watch or in one embodiment by a coil for inductive charging, this coil in one embodiment having a magnetic fastening to the case of the watch. The natural shape of the coil leaves the sensor area of the watch unobstructed, sensors such as, for example, pulse or blood oxygen sensors. Similarly, the claimed subject matter envisages measures to limit the temperature dissipated during charging by means of control logic and at least one temperature sensor, which is non-represented, available in a control unit. In another embodiment the coil has an insulation and/or dissipation layer located between said coil and the wrist of the user.

The charging unit may have a display screen, (not shown) which shows its capacity and/or available charge time and is charged by conventional means such as the use of a USB connector from an external power source, being retained on the strap by conventional means such as magnets. Embodiments have been envisaged where this retention is performed by its design being configured as a conventional ring-shaped strap retainer or with a clamp-like conformation (not shown) which secures the charging unit to the strap.

The charging unit has at least one battery, a microcontroller and a control logic that enables conventional smart charging.

### Description of the drawings

For a better understanding of what is described in the present specification, drawings are attached in which, by way of example, a list of the figures of the proposed invention is represented.
Figure 1 shows a perspective view of the smartwatch charger where the smartwatch (1), the straps (2), the inductive charging coil (3) and the charging unit (4) can be seen, not connected to the watch in this view.
Figure 2 shows a top view, in which the watch is not shown for greater clarity, showing the position and geometry of the coil (3), as well as the fastening elements (5) for fastening the strap to the lugs of the case of the watch.
Figure 3 shows a side view, without the watch, showing the charging unit (4), the electrical contacts (6) of the strap, the strap fastening elements (5) and the coil (3).

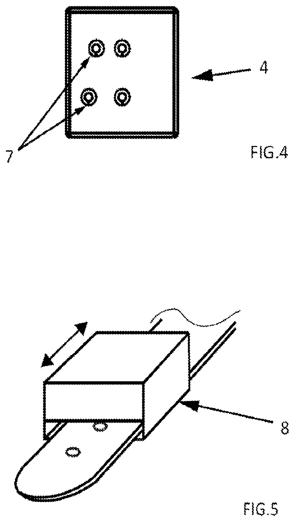

Figure 5 shows a bottom view of the charging unit (4) and the electrical contacts (7) of the charging unit.
Figure 6 shows the charging unit in a configuration such as a ring retainer (8).

### Description of a preferred embodiment

A preferred embodiment is cited by way of example, the materials used in its manufacture, as well as the application methods and all the accessory details that may be presented being independent of the object of the invention, as long as they do not affect their essentiality.

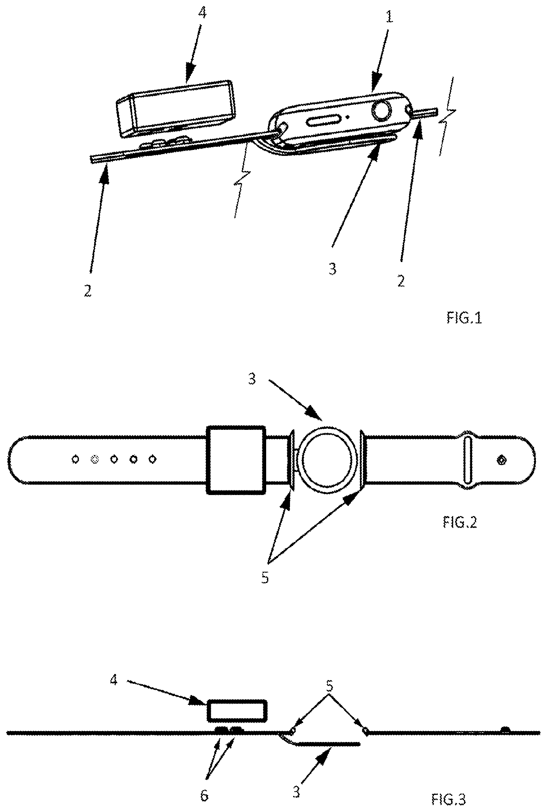

The charger for a smartwatch of this embodiment comprises a charging unit (4) located on the strap (2) of the smartwatch (1), the unit having a plurality of electrical contacts (7) that cooperate with their complementary electrical contacts (6) located on the outer face of the strap, the charging unit transmitting the electrical charge from these contacts to a coil (3) located under the watch case, figure 1, the design of this coil leaving the central area of the watch free where the sensors of the smartwatch operate, the retention and location of the coil with respect to the case of the watch being performed by means of a magnetic coupling (magnets not depicted), the coil comprising an insulation and/or dissipation layer interspersed therebetween and the user's wrist (not depicted).

It also comprises at least one battery, a microcontroller and a control logic that enables smart charging of the device as well as controlling and limiting dissipation temperature during charging by interpreting the signal from at least one temperature sensor (not shown).

In this embodiment, the charging unit comprises visual indication means that show the charge capacity of the charging unit, as well as the recharge time of the batteries of the smartwatch.

For the purpose of providing clarity to this description, the user wears their watch with the electrical contacts on the strap and the coil installed with the insulation and/or dissipation layer thereof, the watch functions being fully operable, when the user considers it necessary, they can attach the charging unit and provide the watch with greater autonomy or charge the batteries of the watch and then remove the charging unit.

## Claims

1. A charger for a smartwatch **characterised in that** it provides electrical charging means for charging the watch while it is being worn, allowing the crown, buttons and rotating bezel to be operated, wherein these means comprise at least one removable charging unit (4) located on the strap (2) that has a plurality of electrical contacts (7) that cooperate with their complementary electrical contacts (6) located on the strap (2), the electrical contacts of the charging unit also serving to charge the same by conventional means, the charging unit comprises at least one battery, a microcontroller and a control logic.

2. The charger for a smartwatch according to claim 1 **characterised in that** it comprises an inductive charging coil (3) as a charging means located under the case of the watch.

3. The charger for a smartwatch according to claims 1 and 2 **characterised in that** the coil is fastened to the case of the watch by means of magnets.

4. The charger for a smartwatch according to claims 1 and 2 **characterised in that** the coil is fastened to the case of the watch by means of adhesives.

5. The charger for a smartwatch according to claim 1 **characterised in that** the means for transferring the charge are electrical contacts located on the strap fastening elements (5) that cooperate with complementary electrical contacts located between the lugs of the watch.

6. The charger for a smartwatch according to claims 1 and 2 **characterised in that** its charging unit (4) comprises means for measuring and limiting the heat that is dissipated during the inductive charging by means of its control logic and at least one temperature sensor.

7. The charger for a smartwatch according to claims 1, 2, 3 and 4 **characterised in that** the coil (3) has an insulation and/or dissipation layer between the coil and the wrist of the user.

8. The charger for a smartwatch according to all the preceding claims **characterised in that** the charging unit has visual indication means for showing the charge capacity and/or charging time.

9. The charger for a smartwatch according to all the preceding claims **characterised in that** the charging unit has a USB connector for its own charging.

10. The charger for a smartwatch according to all the preceding claims **characterised in that** the charging unit has fastening means for fastening to the strap by forming the charging unit as a ring retainer (8).

11. The charger for a smartwatch according to claims 1 to 9 **characterised in that** the charging unit has a fastening means for fastening to the strap by forming the charging unit as a clip.

## Amended claims

### Amended claims under Art. 19.1 PCT

1. A charger for a smartwatch **characterised in that** it provides electrical charging means for charging the watch while it is being worn, allowing the crown, buttons and rotating bezel to be operated, wherein these means comprise at least one removable charging unit (4) located on the strap (2) that has a plurality of electrical contacts (7) that cooperate with their complementary electrical contacts (6) located on the strap (2), the electrical contacts of the charging unit also serving to charge the same by conventional means, comprises an inductive charging coil (3) as a charging means located under the case of the watch with an insulation and/or dissipation layer between the coil and the wrist of the user, the charging unit comprises at least one battery, a microcontroller and a control logic.

2. The charger for a smartwatch according to claim 1 **characterised in that** the coil is fastened to the case of the watch by means of magnets.

3. The charger for a smartwatch according to claims 1 and 2 **characterised in that** the coil is fastened to the case of the watch by means adhesives.

4. The charger for a smartwatch according to claim 1 **characterised in that** the means for transferring the charge are electrical contacts located on the strap fastening elements (5) that cooperate with complementary electrical contacts located between the lugs of the watch.

5. The charger for a smartwatch according to claims 1 and 2 **characterised in that** its charging unit (4) comprises means for measuring and limiting the heat that is dissipated during the inductive charging by means of its control logic and at least one temperature sensor.

6. The charger for a smartwatch according to all the preceding claims **characterised in that** the charging unit has visual indication means for showing the charge capacity and/or charging time.

7. The charger for a smartwatch according to all the preceding claims **characterised in that** the charging unit has a USB connector for its own charging.

8. The charger for a smartwatch according to all the preceding claims **characterised in that** the charging unit has fastening means for fastening to the strap by forming the charging unit as a ring retainer (8).

9. The charger for a smartwatch according to claims 1 to 8 **characterised in that** the charging unit has a fastening means for fastening to the strap by forming the charging unit as a clip.
